# EUROPEAN PATENT APPLICATION

(11) **EP 0 945 153 A1**
(43) Date of publication of application: **29.09.1999**
(21) Application number: 97925352.3
(22) Date of filing: 14.05.1997
(51) Int. Cl.: A62C 3/02, B64D 1/16

(54) **METHOD AND DEVICE FOR LOCATING AND/OR EXTINGUISHING FIRES**

(30) Priority: 24.04.1997 RU 97106264
(71) Applicant: Mezhdunarodny Fond Popechitelei Moskovskogo Gosudarstvennogo Aviationnogo Tekhnologicheskogo Universit Imeni K.E.Tsiolkovskogo, Moscow, 103767 (RU)
(72) Inventor: GUROV, Alexandr Ivanovich, Moscow, 117036 (RU); ZAKHAROV, Vladimir Ivanovich, Moscow, 123458 (RU); LIBERZON, Mark Pakhmilievich, Moscow, 111531 (RU); MITIN, Boris Sergeevich, Moscow, 117485 (RU); ODNOVOL, Leonid Alexandrovich, Moscow, 127322 (RU); SYSTSOV, Apollon Sergeevich, Moscow, 117454 (RU); SYTNIKOV, Alexandr Nikolaevich, Moscow, 123481 (RU)
(74) Representative: Kidd, Piers Burgess
(86) International application number: RU9700151
(87) International publication number: WO9847571

(57) **Abstract**

The present invention relates to a method for locating and/or extinguishing fires, wherein said method is mainly intended for fighting violent and large-scale fires in relatively inaccessible areas. This method comprises applying a combined action directly onto the fire region using a fine-dispersion air cloud (4) of a flame-retardant composition, an air shock wave (5) and a rapid air and detonation-product head which are all generated by the explosion of a dispersion load in a fire-extinguishing device (1) when the latter approaches the burning region. The fire-extinguishing device (1) comprises a vessel made of an ecologically clean material that is filled with a flame-retardant composition. The vessel is fitted with a dispersion charge and a sensor for a given parameter, such as altitude, said sensor being set at a given parameter (altitude) value. When the fire-extinguishing device (1) approaches the burning region and when the value is reached, the dispersion load explodes in a given fire sector. The dimensions and locations of the sectors where the fire must be extinguished are selected according to the type of fire and to the dimensions of the fire-dispersion cloud (4) of flame-retardant composition which is to be created.

## Description

### Field of the Invention

The invention relates to ecology of the environment, to means for fighting fires, and more exactly relates to a method and apparatus for localizing and/or extinguishing fires and can be used for effectively fighting large-scale and intensive fires, including forest and forest-steppe fires, and also fires which occur in almost inaccessible places both geographically (steep mountains, impassable taiga, jungles), and because they are located near a source of danger (explosions, high temperature).

### Background Art

The most advantageous in respect of a sum fire-suppressing effect is the use of a shock air wave, initiated by explosives and directed either to the heart of a fire or along its front.

A method for localizing and extinguishing fires, primarily forest-steppe fires, is known, which consists of creating a gas-air cloud before the front of a fire, which cloud is gaseous propylene oxide dispersed in air, drifting toward the combustion zone and exploding under the effect of a thermal pulse when it reaches the combustion zone (SU, N 1111292).

As a result of the shock air wave, the flame is blown away, small burning fragments, burning and smoldering materials are carried from the front of the fire to the inside of the combustion zone, while the surface before the front of the fire is cleaned of easily combustible materials. Furthermore, the diffusion of oxygen to the combustion zone is temporarily stopped as a result of dilution of the air with incombustible gases which are formed as a result of the explosion of the gas-air cloud.

The achievement of all the aforesaid effects of the shock air wave is possible with high probability that there will be an explosion. However, at the best, the gas-air cloud will burn and not detonate, since the spontaneous drift of the cloud will for the most part occur upwards before the front of the fire, the cloud will be dispersed, and this will reduce the concentration of explosives and eliminate the occurrence of an explosion.

An apparatus is known for localizing and extinguishing fires which occur in geographically almost inaccessible locations or because of the close positioning of a source of danger (FR No. 2643820).

An apparatus is known which is called a water bomb and is designed to be transported by airplanes or heavy helicopters and to be released into the hearts of fires. A water bomb is characterized by the presence of a cylindrical reservoir of thin steel sheet with apertures for filling with a fire-extinguishing liquid and for the exit of air, with notches on all the side walls of a depth equal to half the thickness of the metal. Water, a wetting liquid and carbonic acid may be used as the fire-extinguishing filler. When the water bomb is released, it bursts when it touches earth due to the preliminary weakened zones in the metal and allows the fire-extinguishing liquid to pour onto the heart of the fire.

A drawback of this known fire-suppressing apparatus is the high probability that the cylindrical reservoir will burst before it should because of an impact against an obstacle located prior to the fire zone, for example, against a thick branch of a tree, which reduces the effectiveness of extinguishing the fire.

Furthermore, the dropped fire-extinguishing liquid is distributed in the fire zone in a non-uniform manner, splashes out after the impact and bursting of the shell.

This apparatus does not provide for the use of other fire-extinguishing compositions than those listed, which substantially limits the field of its use.

In order to extinguish forest fires (high or combined) widely used are methods based on the creation of fire-fighting barriers by complex action combining a system of local explosions and spraying fire-extinguishing compositions and stretched out in time.

One of the known methods for localizing and extinguishing fires consists of delivering fire-suppressing devices by means of a mobile launching apparatus of the volley fire type (SU, No. 1789232).

The fire-suppressing device realizing this known method is made in form of a missile fired from a mobile, ground- or air-based, launching apparatus.

The missile is provided with a body made of two halves, which opens when a central charge of explosive, positioned along the axis of the missile and actuated at a signal from a thermal sensor located in the front part of the missile, explodes. A composite system in the form of bundles of elements with an explosive and a fire-extinguishing composition is positioned around the central charge, and the bundles themselves of elements are positioned successively along one axis in the form of a packet. All the elements of the composite system have their own thermal or inertial sensors. The halves of the body are provided with braking devices (parachutes) to ensure safe landing, and a jet engine is positioned in the bottom part of the missile.

The fire-extinguishing method consists of the following steps. When the missile approaches the front of the fire, the central charge of explosive is actuated by a signal from a front thermal sensor and the halves of the body are released and descend by parachute. Simultaneously, the bundles of elements are released, which, freely falling, reach the fire zone. Some of the elements are designed for fighting low fires and are provided with inertial sensors which actuate upon impact with the ground. Another part of the elements are initiated in the canopy of a forest by thermal sensors set for different temperature modes. It is presumed that such complex action, combining a system of local explosions and spraying fire-extinguishing compositions, extended in time, ensures the effective suppression of a fire.

This method and apparatus for carrying it out have a number of drawbacks which substantially impair effectiveness and increase expenditures on realization. The presence of two types of composite elements (the central charge of explosive and the fire-extinguishing composition with an explosive charge) and their successive initiation result in separate action of a shock wave and a fire-extinguishing composition on a fire, in respect of place and time. This may promote repeated combustion at separate areas and possibly further development of the fire, since the flame will only be blown away at those areas, while the heart is not insulated or cooled with the fire-extinguishing composition.

Use of a volley fire system for delivering composite elements into the fire zone also reduces the effectiveness of the method, since with a fixed caliber of rockets and missiles, the obligatory presence of ancillary devices (engine, central charge for opening the body, parachute) is presumed. The low value of the coefficient of filling the delivery means - the ratio of the useful weight (the fire-extinguishing composition and the charges of explosive) to the total weight of the means for delivery, substantially increases expenditures in extinguishing fires.

Furthermore, when volley fire systems are used, the aiming is at areas, which may be ineffective during localization of a fire, since in that case, first of all it is necessary to stop forward movement of its front (the line of fire), and not suppress the flame in the area encompassed by the fire.

A substantial drawback of the known method is the high danger of contamination and damage to the environment by the multiple pieces of the body and composite elements, made as a rule of metal, which are produced during actuation.

A danger which is just as bad is the mining of the region of the fire with composite elements containing charges of explosive, since reserve sensors are not provided which would cause explosion of the elements when they reach earth.

Another known method for localizing and extinguishing fires, primarily forest fires, is also based on the use of a shock air wave before the front of the fire in order to create a zone of higher pressure which is lengthy in respect of both height and width (SU, No. 1834667).

The known method consists of placing a multiplicity of fire-suppressing apparatuses and detonating charges in the canopy of a forest in the path of the front of a fire. Each fire-suppressing apparatus is filled with a liquid combustible and is provided with a dispersing charge. At the command of an operator, when the front of a fire approaches, the fire-suppressing apparatuses are successively actuated by means of control signals by exploding the dispersing charge, wherein a finely dispersed combustible-air cloud is formed. Then after several tens of milliseconds, this cloud is exploded by means of detonating charges, wherein the formed front of the shock air wave blows away easily burning objects, small branches, dry leaves, grass, and also flame of the understory fire, thus forming a fire-fighting belt.

The used fire-suppressing apparatus is made in the form of a vessel, inside which a dispersing charge, surrounded by a liquid hydrocarbon combustible (for example, ethylene oxide), is placed. The initiator of the explosion of the dispersing charge is coupled to an electrical control signal circuit which is located on a control panel. This circuit also produces a control signal for explosion of the detonating charge.

This method can only be used to create barrier belts in the path of a low power understory fire. The method has the greatest effect in localizing steppe fires and bush fires. Wherein the fire is only localized, but not suppressed, and even more, not extinguished.

The main drawback of the aforesaid known method and apparatus for carrying it out is the high probability of undesired spontaneous combustion of the combustible-air cloud even before the detonating charge is set off.

This is explained by the fact that in the fire zone, and especially in its heart, the temperature gradients and velocities of air flows are of random character, which hinders the existence of a combustible-air cloud of stoichiometric composition and makes the selection of the delay of explosion of the detonation charge difficult.

At best, an incomplete detonation takes place, and more often than not, combustion of the combustible-air mixture, which causes an artificially created heart of a fire and results in its further intensification.

Furthermore, where detonation of the finely-dispersed combustible-air cloud is successful and a shock air wave is created, the action of the latter is not supported by additional cooling and insulation of the fire zone because of the absence of the possibility of using fire-extinguishing compositions. Therefore, the processes accompanying the fire and promoting its development and spread (heating, drying, pyrolysis) are not stopped, and this sharply reduces the effectiveness of this method.

One of the substantial drawbacks is the limited use of this method because its use is not possible in almost inaccessible places and to extinguish large-scale fires.

### Disclosure of the Invention

The object at the base of the invention is to create a method and apparatus for localizing and/or extinguishing fires in which multiple expansion of a fire suppressing belt with reduction of the surface density of a fire-extinguishing composition by tens of times, achievement of the suppression of a fire in almost inaccessible places and the achievement of safety for the environment would be ensured due to the instantaneous conversion of the fire-extinguishing composition into a finely-dispersed cloud with the simultaneous action of a shock air wave on a combustion zone with the high probability of actuating a fire-suppressing device in that zone, with maximum spreading of the fire-extinguishing composition over the scope of the fire.

This object is achieved in a method for localizing and/or extinguishing fires, based on the action of a shock air wave created by means of fire-suppressing apparatuses, containing a filler and a dispersing charge actuated by a control signal, which apparatuses are delivered to the fire zone, in that in accordance with the invention, a fire-extinguishing composition is used as the filler of the fire-suppressing apparatuses, means for delivering the fire-suppressing apparatuses and the fire-extinguishing composition filling them are preselected depending on the characteristics of the fire, areas on which the fire-suppressing apparatuses should be actuated are determined, then, depending on the selected means for delivering the fire-suppressing apparatuses, a parameter is determined, a control signal for actuating the dispersing charge is provided when the aforesaid parameter reaches a predetermined value, fire-suppressing apparatuses are used which are provided with sensors of the aforesaid selected parameter, the sensors being adjusted to the predetermined value of the parameter, when this value is reached as a fire-suppressing apparatus approaches a combustion zone at the aforesaid predetermined area an explosion of the dispersing charge occurs directly in the fire zone with the simultaneous formation of a shock air wave, a velocity head of air and products of detonation and spraying of the fire-extinguishing composition on that area with the formation of a finely dispersed cloud, wherein the size and location of the areas are selected depending on the type of fire and the dimensions of the formed finely dispersed cloud of the fire-extinguishing composition.

This makes it possible to ensure universal use of the fire-suppressing apparatuses and a wide range of utilization against forest, city fires, for protection of territory against external fires, and also in the case of large-scale fires and fires in almost inaccessible places. Wherein, there is no loss of the fire-extinguishing composition when it is delivered to the combustion zone, there is a uniform distribution of the fire-extinguishing composition over the surface of combustion, additional fire-suppressing factors (positive pressure, a shock air wave and a velocity head) are present.

During the suppression of large-scale fires it is advisable to select aerial means for delivering the fire-suppressing apparatuses as the delivery means, releasing the apparatuses above areas of the fire zone which are predetermined and selected from fire conditions, and it is necessary to select as the parameter thereof the height at which the fire-suppressing apparatus is above the earth and to use fire-suppressing apparatuses which are equipped with height sensors preliminarily adjusted to a preselected, on the basis of the fire conditions, height above the ground in the combustion zone at which it should actuate, when this height is reached by the fire-suppressing apparatus the dispersing charge is actuated by a control signal from the height sensor.

The use of aerial means for delivery makes it possible to ensure high probability that the fire-suppressing apparatus will reach the heart of the fire, which is important in geographically almost inaccessible places - in mountains, remote areas of the taiga, jungles, under conditions where there are no roads. This method provides the possibility of extinguishing a fire there where the danger of an explosion exists, high temperature is developed, firemen's lives are in danger. Wherein, it is possible to use regular planes and helicopters, military-transport planes, the struggle against fires can be carried out both during the day and at night.

It is also advisable in the method to use ground-based means for delivering the fire-suppressing apparatuses into the fire location, placing those means at preselected locations before an approaching front of fire, to select temperature as the parameter, wherein it is advisable that the fire-suppressing apparatuses be equipped with temperature sensors, preliminarily adjusted, on the basis of fire conditions, to an actuation temperature at which, when reached as the front of the fire approaches the location of the fire-suppressing apparatus, an explosion of the dispersing charge takes place according to a control signal from a temperature sensor.

As a result of the combined action of the shock air wave and the cooling and insulating effect of the fire-extinguishing composition, a reliable and rapid localization of the fire and protection of territories located in a forest or steppe having permanent positioning thereon of valuable and/or dangerous objects are ensured.

The stated object is also achieved in a fire-suppressing apparatus realizing the method for localizing and/or extinguishing fires, comprising a vessel with a filler and a dispersing charge of explosive, an initiator of the explosion of which is coupled to an electrical control signal circuit, in that in accordance with the invention, the vessel comprises a fire-extinguishing composition as the filler, while the electrical control signal circuit is equipped with a sensor of the aforesaid selected parameter, the sensor being adjusted to a predetermined value of the parameter and electrically coupled to the explosion initiator which causes the automatic actuation of the dispersing charge by a control signal of the sensor when it reaches the aforesaid predetermined value when the fire-suppressing apparatus approaches the burning zone.

The proposed fire-suppressing apparatus ensures uniform distribution of the fire-extinguishing composition, makes it possible to use a wide range of fire-extinguishing compositions (powders, water, special solutions) and has a high probability of actuation at the necessary area of the burning zone.

It is possible that the sensor of the selected parameter in the fire-suppressing apparatus may be a height sensor preadjusted to a preselected, on the basis of the fire conditions, height above the ground in the fire zone, at which height when the fire-suppressing apparatus approaches the ground the automatic actuation of the dispersing charge of explosive takes place in accordance with a control signal from the height sensor.

It is also possible that the sensor of the selected parameter in the fire-suppressing apparatus may be a temperature sensor preset to a preselected, on the basis of the fire conditions, temperature, at which the automatic actuation of the dispersing charge of explosive takes place in accordance with a control signal from the temperature sensor.

The fire-suppressing apparatus may be further provided with a contact sensor which is electrically coupled to an initiator of an explosion of the dispersing charge of explosive and produces a control signal upon contact between the fire-suppressing apparatus and an obstacle.

Wherein, the use of the fire-suppressing apparatus with a contact sensor does not result in mining of the fire area.

It is quite advisable where a helicopter is used as means for delivery that each of the fire-suppressing apparatuses be placed in a container suspended under the helicopter and fixed with a lock which releases the fire-suppressing apparatus at a release signal.

Such a container delivery of the fire-suppressing apparatuses does not require conversion of a helicopter equipped with an external suspension unit and makes it possible to use the latter for other purposes in a fire-safe period.

The height sensor may be a radio sensor, which ensures high reliability of actuation of the apparatus and high performance in terms of error probability.

And, finally, use of cardboard with a water-resistant coating as the vessel material promotes minimum contamination of the environment.

### Brief Description of the Drawings

Further, the invention will be explained by a description of concrete examples of embodiment and the accompanying drawings in which:
Fig. 1 shows schematically one of the embodiments of a method for localizing and/or extinguishing fires, according to the invention, in the case where aerial means are used for delivery of fire-suppressing apparatuses;
Fig. 2 shows the same, according to the invention, in the case where there is ground-based delivery of fire-suppressing apparatuses;
Fig. 3 shows a fire-suppressing apparatus, according to the invention, with a longitudinal section of the vessel and conditional representation of elements of the electrical control signal circuit;
Fig. 4 shows units of the electrical control signal circuit and their connection to an initiator of explosion of a dispersing charge of explosive, according to the invention.

### Best Method of Carrying Out the Invention

The method for localizing and/or extinguishing fires is carried out as follows.

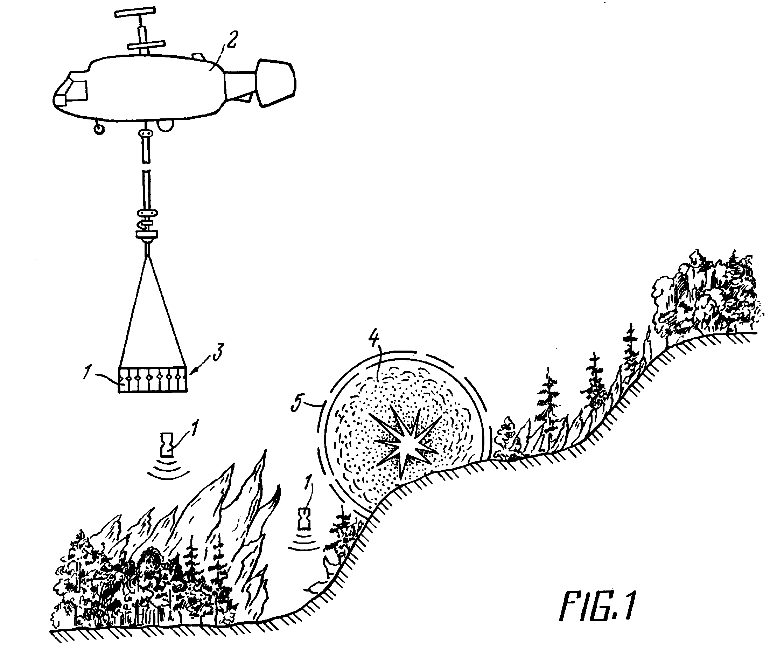

Means for delivering fire-suppressing apparatuses 1 (Fig. 1) are selected depending on the characteristics of a fire. In the presented drawing this is an aerial delivery means - helicopter 2, under the bottom of which is suspended a container 3 with several tens of fire-suppressing apparatuses 1 filled with a fire-extinguishing composition which is selected depending on the conditions and kind of fire.

The character of the fire is preliminarily analyzed and areas determined on which it is necessary to drop the fire-suppressing apparatuses 1, a map is made of these areas. Then a parameter is selected in accordance with which actuation of the fire-suppressing apparatuses 1 will be tracked. In this embodiment, shown in Fig. 1, such a parameter is the height at which a fire-suppressing apparatus 1 is located above the ground during its fall when dropped over a combustion zone. Furthermore, this selected parameter may be the time of delivery of a fire-suppressing apparatus 1 from the time of release until it reaches the necessary height above the ground in that zone. In the case of release from the container 3, fire-suppressing apparatuses 1 are used which are equipped with height sensors preset to a predetermined, selected on the basis of fire conditions, height of actuation above the ground in the combustion zone, wherein when that height is reached the dispersing charge is actuated by a control signal from the height sensor. The result of this is the formation of a finely dispersed cloud 4 of fire-extinguishing composition directly in the fire zone with the simultaneous formation of a shock air wave 5 which is accompanied by a head of air and detonation products. The dimensions and location of the areas of action of the fire-suppressing apparatuses 1 are selected depending on the type of fire and dimensions of the finely dispersed cloud 4 being formed. When a helicopter 2 is used, the fire-suppressing apparatuses 1 in the container 3 are fixed with a lock which releases the apparatuses 1 at a release signal.

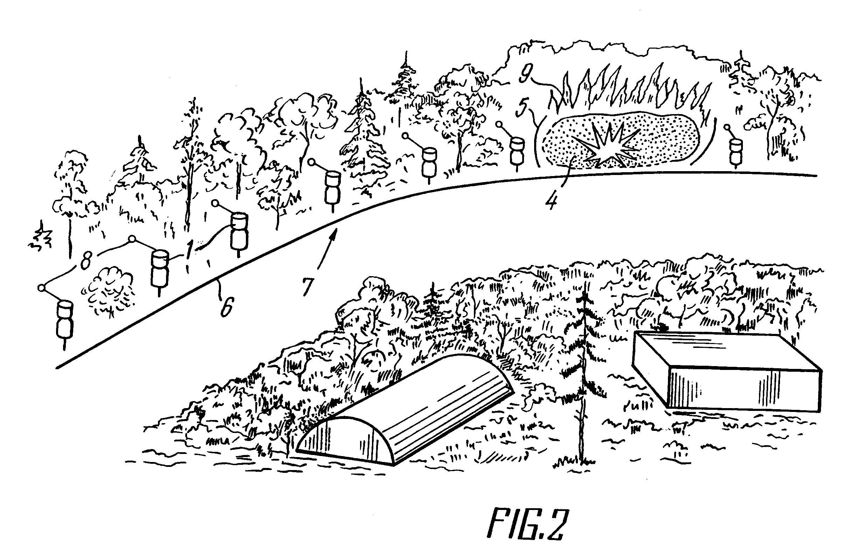

Fig. 2 shows schematically another embodiment of the method, wherein it is necessary to protect objects from external fires. Here ground-based means for delivering fire-suppressing apparatuses 1 are used, the latter being placed on preselected locations before the presumed front of the fire.

In this embodiment of the method the main object is to protect territory from an external, for example, forest or steppe, fire. There are territories located in a forest or in a steppe in which military objects, settlements, forest parks, oil fields and gas fields and other national economy objects are located. Their protection from an external fire consists of the following.

In a period of danger, when the probability that a fire will occur is likely (for example, May-September for the central region of Russia), fire-suppressing apparatuses 1 are set along a perimeter 6 of territory 7 being protected (possibly only in the directions under threat) at a height of 1.5-2 meters above the ground surface at an interval equal to the diameter of the zone of effect of one fire-suppressing apparatus 1. The apparatuses 1 are provided with temperature sensors 8 which are adjusted, for example, to a temperature t = 250-300°C. The value depends on the composition of the combustible material in the area of the territory being protected. When the front of a fire approaches to a distance at which the temperature in the neighborhood of a fire-suppressing apparatus 1 reaches this value, a control signal is actuated to initiate a dispersing charge of explosive. This method may be supplemented with electrical circuits through which a signal for actuation of a fire-suppressing apparatus 1 may be supplied by an operator. This embodiment is advisable for protection of territories with the permanent location thereon of valuable or dangerous objects (arsenals, military bases, oil fields, gas fields, and also their reservoirs).

The suppression of a fire and formation of a protective belt around the territory is also carried out by the combined effect of a finely dispersed cloud 4 of fire-extinguishing composition and a front of a shock air wave 5, accompanied by a velocity head of air and detonation products.

Consideration will be now given to the proposed fire-suppressing apparatus 1 and its operation in the case of its use to extinguish forest fires.

In the case of extinguishing forest fires in remote or almost inaccessible areas, and also large-scale fires when hundreds of square kilometers of forests are encompassed by fire, it is advisable to use aerial delivery of fire-suppressing apparatuses 1 which are placed in a transport container 3 suspended under the helicopter 2 and delivered to the fire area, as shown in Fig. 1. During the suppression of a forest fire it is important to stop its front and not allow the fire to spread further, i.e. to localize the fire. In order to do this the fire-suppressing apparatuses 1 are dropped along the front of the fire at a predetermined time interval, the value of which depends on the velocity of the helicopter 2 and the dimensions of the zone of action of one apparatus 1. Thus, for example, at a helicopter velocity of 55 m/s (about 200 km/hour) and a diameter of the dispersion zone of one fire-suppressing apparatus equal to 15 m, the interval of dropping is 0.27 s, while at a velocity of the helicopter of 42 m/s (about 150 km/hour) and the same size of the dispersion zone, the interval is 0.36 s.

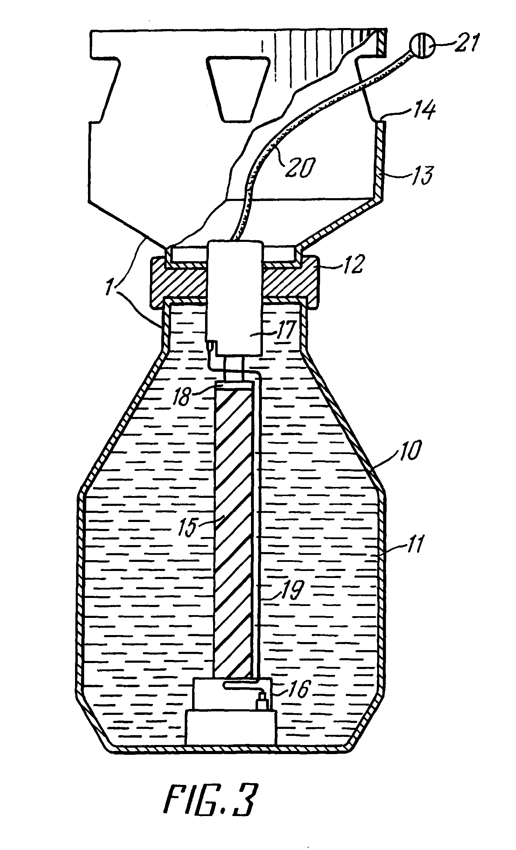

The fire-suppressing apparatus 1 (Fig. 3) is made in the form of a vessel having a body 10 with side walls of cylindrical shape and filled with a fire-extinguishing composition 11, for example, a mineral-water suspension on the base of silicon oxides.

Furthermore, different special powders, solutions, and also water, can be used as the fire-extinguishing composition.

The vessel may be made of an ecologically clean material, for example, from durable cardboard with water-resistant impregnation or a water-resistant coating.

When such material gets into the environment it rapidly breaks down.

The upper part of the body 10 by means of a coupling 12 is connected to a stabilizer 13 having side recesses 14 and made from cardboard. A dispersing charge 15 of explosive is a charge of condensed explosive of cylindrical shape which is positioned axisymmetrically to the cylindrical body 10 of the vessel.

The electrical control signal circuit is placed in two sealed boxes 16, 17, one of which is positioned at the bottom of the vessel under the dispersing charge 15 of the explosive and serves to hold the sensors, while the other is positioned in the upper part of the vessel near an explosion initiator 18 adjoining the dispersing charge 15. The boxes 16, 17 are electrically connected by a cable 19.

A cable assembly 20 with a contact ball 21 is connected to the upper box 17 and serves for connecting a fire-suppressing apparatus 1 (Fig. 1) to the container 3 on which the fire-suppressing apparatuses 1 are arranged when they are delivered by the helicopter 2.

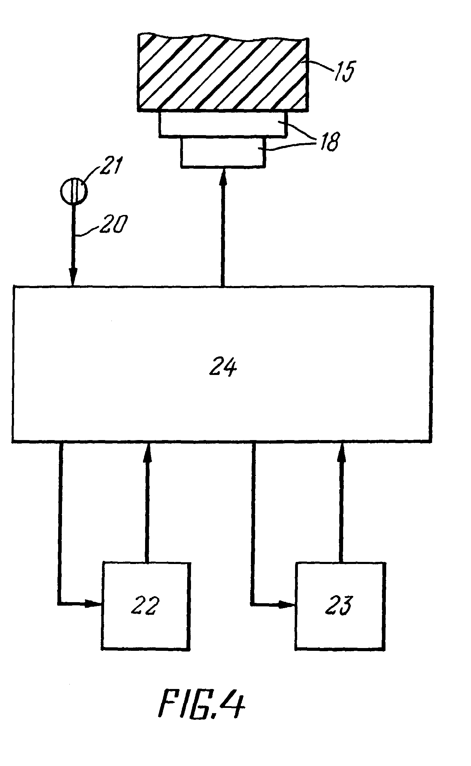

A height sensor 22 (Fig. 4) and a contact sensor 23 are arranged in the sealed box 16. The control signal outputs of sensors 22 and 23 are connected to inputs of a unit 24 for converting a control signal into an actuating signal to initiate an explosion. The conversion unit 24 is made according to a known protective-actuating circuit, widely used in explosion engineering to form a control signal to initiate an explosion with elements for protection against unauthorized actuation.

The conversion unit 24 has an input electrically connected to the contact ball 21, an output of a protection removal signal which is connected to an input of the contact sensor 23, and an output of the protection removal signal which is connected to an input of the height sensor 22.

The height sensor 22 may be a radio sensor made, for example, on the basis of a known circuit for comparing the amplitude of a Doppler signal reflected from earth with a threshold value, and producing a control signal at a fixed predetermined height of actuation in the range of 2-5 meters from earth with a reliability of 0.95-0.98 and high noise immunity.

The conversion unit 24 is connected at its actuating signal output to the initiator 18 of explosion of the detonating charge 15.

In the case of another selected parameter in accordance with which actuation of the fire-suppressing apparatuses 1 (Fig. 2) is tracked, a temperature sensor 8 is used as the parameter sensor, the contact sensor 23 is removed, and in other respects the electrical circuit is made in a manner similar to that shown in Fig. 4.

The fire-suppressing apparatus 1 (Fig. 1) operates in the following manner. At the command of an operator who is on the helicopter 2, a signal is given for actuation of the lock positioned in the transport container 3. After the lock is actuated, a fire-suppressing apparatus 1 is dropped under the force of gravity and while falling stretches the cable assembly 20 (Fig. 3), pulls away the contact ball 21 and removes it from the guides of the container 3 (Fig. 1). Wherein, the first stage of protection is removed and the sensors 22 and 23 (Fig. 4) are connected to a power supply. Three seconds after the apparatus is dropped and the fire-suppressing apparatus 1 (Fig. 1) has moved to a safe distance from the helicopter 2, the second protection stage is removed and the height sensor 22 (Fig. 4) begins to operate, constantly measuring the distance to earth. When the predetermined height is reached, a signal from the sensor 22 is applied to an input of the conversion unit 24, which forms and outputs an actuating signal which causes actuation of the initiator 18 of an explosion and subsequent explosion of the dispersing charge 15. If there is a failure of the height sensor 22, the actuation signal is duplicated by the contact sensor 23 upon impact with earth.

The detonation wave and explosion products formed as a result increase the pressure within the volume of the fire-suppressing apparatus 1 (Fig. 1) hundreds of thousands of times, which results in destruction of the body 10 (Fig. 3) and ejection of the fire-extinguishing composition 11. In the process of moving, the fire-extinguishing composition 11 is broken into drops having a size of several tens of microns, this increases the surface of interaction of the composition with the burning material and enhances the efficiency of its use. Expansion of the explosion products causes the formation of a shock air wave (Fig. 1), which moves at supersonic speed in front of the cloud 6 of the dispersed composition. The extinguishing mechanism consists of the simultaneous action of the shock wave, velocity head and fire-extinguishing composition on the heart of the fire. The first two factors blow the flame away and move the combustible material away, and the fire-extinguishing composition cools the heart and insulates the burning material, stopping pyrolysis and heating of the environment.

### Industrial Applicability

The invention is designed for effective use in almost inaccessible locations, for extinguishing large-scale and intensive fires where there is danger of explosion and development of high combustion temperature. Use of the proposed method and fire-suppressing apparatus makes it possible to reduce the surface density of the fire-extinguishing composition tens of time and on the whole expenditures on extinguishing and localizing fires. The absence of loss of the fire-extinguishing composition when it is being delivered to the combustion zone, the uniform distribution of the composition over the combustion surface, the combined action of the finely dispersed cloud of the fire-extinguishing composition, the positive pressure of the shock air wave and the velocity head - all this provides a substantial advantage of use of the proposed invention as compared with prior art. It has been experimentally determined that the surface density of the fire-extinguishing solution required to stop the burning of combustible forest material is 0.120-0.150 kg/m², while when water is used by sprinkling, a density of 12-15 kg/m² should be created. Where the volume of a fire-suppressing apparatus is, for example, 0.04 m³, the radius of suppression of a forest fire is 7-8 meters, which makes it possible with one charge of a container with 42 fire-suppressing apparatuses to create a suppression belt which is 15-20 meters wide and 600-800 meters long.

One of the substantial factors affecting the advantageous use of the proposed invention is its universality, the possibility for use in both urban and field conditions, for protection of territories against intensive fires, for extinguishing forest and steppe fires, the possibility for use of regular planes, military transport aviation, helicopters, the possibility of fighting fires around the clock.

## Claims

1. A method for localizing and/or extinguishing fires, consisting of providing action with a shock air wave (5) created by means of fire-suppressing apparatuses (1) containing a filler and a dispersing charge (15) actuated by a control signal, said apparatuses being delivered to a fire zone, characterized in that a fire-extinguishing composition (11) is used as the filler of the fire-suppressing apparatuses (1), means for delivering the fire-suppressing apparatuses (1) and the fire-extinguishing composition (11) filling them are preselected depending on the characteristics of the fire, areas on which the fire-suppressing apparatuses (1) should be actuated are determined, then, depending on the selected means for delivering the fire-suppressing apparatuses (1), a parameter is determined, a control signal for actuating the dispersing charge (15) is provided when said parameter reaches a predetermined value, fire-suppressing apparatuses (1) are used which are provided with sensors of said selected parameter, the sensors being adjusted to the predetermined value of the parameter, when this value is reached as a fire-suppressing apparatus (1) approaches a combustion zone at said predetermined area an explosion of the dispersing charge (15) occurs directly in the fire zone with the simultaneous formation of an impact air wave (5), a velocity head of air and products of detonation, and spraying the fire-extinguishing composition (11) on that area with the formation of a finely dispersed cloud (4), wherein the size and location of the areas are selected depending on the type of fire and the dimensions of the formed finely dispersed cloud (4) of the fire-extinguishing composition (11).

2. A method according to claim 1, characterized in that aerial means are selected for delivering the fire-suppressing apparatuses (1) into the fire zone, releasing the apparatuses above predetermined areas of the fire zone, the height at which a fire-suppressing apparatus is above the earth is selected as the parameter, fire-suppressing apparatuses (1) are used which are equipped with height sensors (22) preliminarily adjusted to a preselected, on the basis of the fire conditions, height above the ground in the combustion zone at which it should actuate, when this height is reached by the fire-suppressing apparatus (1) the dispersing charge (15) is actuated by a control signal from the height sensor (22).

3. A method according to claim 1, characterized in that ground-based means are selected for delivering the fire-suppressing apparatuses (1) into the fire area, placing the latter at preselected locations before an approaching front (9) of fire, temperature is selected as the parameter, wherein fire-suppressing apparatuses (1) are used which are equipped with temperature sensors (8), preliminarily adjusted, on the basis of fire conditions, to an actuation temperature at which, when reached as the front (9) of the fire approaches the location of the fire-suppressing apparatus (1), an explosion of the dispersing charge (15) takes place according to a control signal from a temperature sensor (8).

4. A fire-suppressing apparatus realizing the method for localizing and/or extinguishing fires according to claim 1, the apparatus comprising a vessel with a filler and a dispersing charge (15), an initiator (18) of the explosion of which is coupled to an electrical control signal circuit, characterized in that the vessel is filled with a fire-extinguishing composition (11), while the electrical circuit comprises a sensor of said selected parameter, the sensor being adjusted to a predetermined value of the parameter and electrically coupled to the explosion initiator (18) which causes actuation of the dispersing charge (15) by a control signal of the sensor when it reaches said predetermined value as a fire-suppressing apparatus (1) approaches the combustion zone.

5. A fire-suppressing apparatus according to claim 4 together with claim 2, characterized in that it comprises as the sensor of the selected parameter a height sensor (22) preadjusted to a preselected, on the basis of the fire conditions, height above the ground in the fire zone, at which height when the fire-suppressing apparatus (1) approaches the ground the automatic actuation of the dispersing charge (15) of explosive takes place in accordance with a control signal from the height sensor (22).

6. A fire-suppressing apparatus according to claim 4 together with claim 3, characterized in that it comprises as the sensor of the selected parameter a temperature sensor (8) preadjusted to a preselected, on the basis of the fire conditions, temperature, at which the automatic actuation of the dispersing charge (15) of explosive takes place in accordance with a control signal from the temperature sensor (8).

7. A fire-suppressing apparatus according to claim 5, characterized in that it further comprises a contact sensor (23) which is electrically coupled to an initiator (18) of an explosion of the dispersing charge (15) of explosive and produces a control signal upon contact between the fire-suppressing apparatus (1) and an obstacle.

8. A fire-suppressing apparatus according to any one of claims 5, 7, characterized in that where a helicopter (2) is used as means for delivery, the fire-suppressing apparatus (1) is placed in a container (3) suspended under the helicopter (2) and fixed with a lock which releases the fire-suppressing apparatus (1) at a release signal.

9. A fire-suppressing apparatus according to claim 5, characterized in that it is provided with a radio sensor as the sensor (22).

10. A fire-suppressing apparatus according to any one of claims 5-9, characterized in that the vessel is made of cardboard with a water-resistant coating.
